# FASCICULE DE BREVET EUROPEEN

(11) **EP 0 646 078 B1**
(45) Date de publication et mention de la délivrance du brevet: **21.02.1996**
(21) Numéro de dépôt: 93913081.1
(22) Date de dépôt: 02.06.1993
(51) Int. Cl.: B60T 13/57

(54) **DISPOSITIF DE COMMANDE A CLAPET POUR SERVOMOTEUR PNEUMATIQUE**
STEUERVENTIL FÜR EINEN UNTERDRUCK-KRAFTVERSTÄRKER
CONTROL VALVE DEVICE FOR A PNEUMATIC SERVO

(30) Priorité: 25.06.1992 FR 9207780
(43) Date de publication de la demande: 05.04.1995
(73) Titulaire: ALLIEDSIGNAL EUROPE SERVICES TECHNIQUES, F-93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(86) Numéro de dépôt international: FR9300523
(87) Numéro de publication internationale: WO9400325

(56) Documents cités:
- EP-A- 0 478 396
- GB-A- 2 054 777

## Description

La présente invention concerne un dispositif de commande à clapet pour un servomoteur pneumatique d'assistance au freinage, comprenant :
- une tige de commande susceptible, à partir d'une position de repos, de subir un déplacement suivant une première direction axiale sous l'effet d'un effort d'entrée, cette tige étant coiffée par un palpeur lui-même terminé axialement par une face d'appui ;
- un clapet annulaire entourant la tige de commande, ce clapet étant élastiquement sollicité vers la première direction axiale et susceptible d'être actionné par le déplacement de la tige de commande ;
- un premier siège de clapet, formé par une partie annulaire du palpeur à l'opposé de la face d'appui de ce dernier ;
- un piston pneumatique susceptible de se déplacer suivant la première direction axiale, depuis une position de repos, sous l'effet d'une différence de pression commandée par un actionnement du clapet, ce piston présentant une surface annulaire axiale qui entoure le palpeur ;
- un disque de réaction logé dans une coupelle et présentant une face libre sur laquelle la surface annulaire axiale du piston pneumatique et la face d'appui du palpeur sont susceptibles d'appliquer des efforts combinés à destination d'une tige de poussée ; et
- un second siège de clapet de forme annulaire, concentrique et extérieur au premier siège, et occupant dans la position de repos de la tige de commande une position plus avancée que celle du premier siège de clapet dans le sens de la première direction axiale, le clapet se trouvant appliqué sur le premier siège dans la position de repos et sur le second siège lors de son actionnement.

Les dispositifs de ce type sont bien connus dans l'art antérieur et un exemple parmi de nombreux autres en est donné par le brevet US 4 491 058.

L'utilisation conjointe, dans les véhicules à moteur, de systèmes pneumatiques d'assistance au freinage et de systèmes électroniques destinés à éviter le blocage des roues a fait récemment apparaître le besoin d'améliorer, en le réduisant, le temps de réponse des premiers pour le rapprocher des temps de réponse très courts des seconds.

Dans ce contexte, la présente invention a précisément pour but de réduire le temps de réponse d'un servomoteur pneumatique d'assistance au freinage, c'est-à-dire le temps séparant la sollicitation du frein par le conducteur d'un véhicule et l'apparition d'un effort d'assistance au freinage d'amplitude significative.

Ce but est atteint, selon l'invention, par un dispositif de commande à clapet pour servomoteur, essentiellement caractérisé par le fait que le second siège du clapet est formé par une face d'extrémité d'un manchon monté de manière à pouvoir coulisser de façon étanche par rapport au piston et conformé pour ne subir, par rapport à la coupelle, aucun mouvement dans le sens de la première direction axiale lors de l'actionnement du clapet.

Grâce à cette disposition, la distance séparant les premier et second sièges de clapet lors de l'actionnement de ce dernier se trouve augmentée, ce qui a pour effet l'établissement plus rapide, dans le servomoteur, de la différence de pression qui engendre l'effort d'assistance au freinage.

Selon un premier mode de réalisation de l'invention, le manchon formant le second siège de clapet s'appuie sur la coupelle, au moins par une extension axiale.

Selon un second mode possible de réalisation de l'invention, le manchon formant le second siège de clapet est disposé entre le palpeur et le piston et présente une seconde face d'extrémité contre laquelle, lors de l'actionnement du clapet, la face libre du disque de réaction vient s'appuyer avant de venir toucher le palpeur, ce manchon subissant alors, par rapport à la coupelle, un mouvement suivant une seconde direction axiale, opposée à la première.

D'autres caractéristiques et avantages de l'invention ressortiront clairement de la description qui en est faite ci-après, à titre indicatif et nullement limitatif, en référence aux dessins dans lesquels :
- La Figure 1 est une vue en coupe d'un servomoteur pneumatique d'assistance au freinage, utilisée pour rappeler le principe de fonctionnement d'un tel dispositif ;
- La Figure 2 est une vue en coupe partielle d'un servomoteur, représentant un dispositif de commande à clapet conforme à un premier mode de réalisation de l'invention ; et
- La Figure 3 est une vue analogue à celle de la Figure 2 et relative à un second mode de réalisation de l'invention.

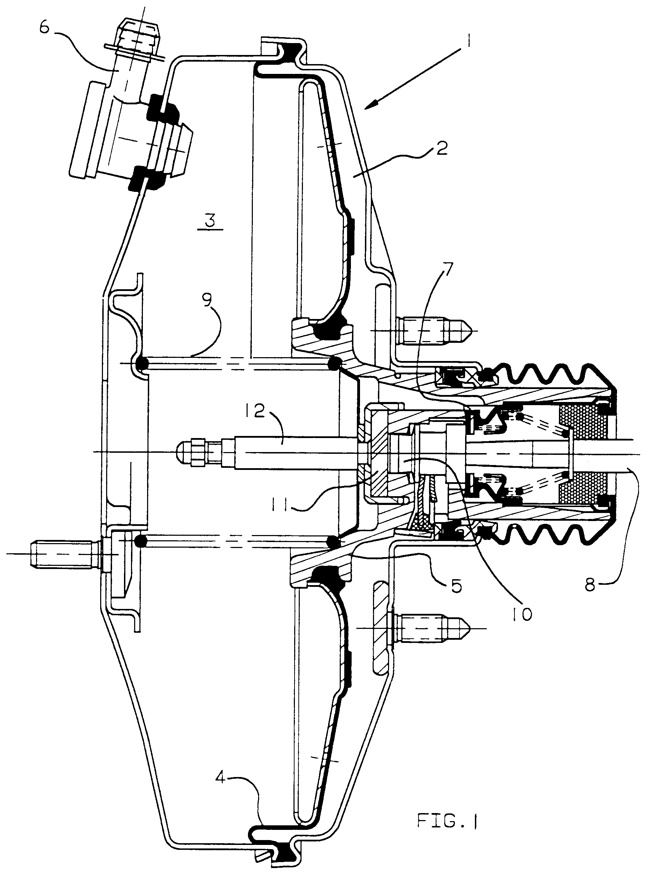

L'invention concerne un perfectionnement apporté aux servomoteurs pneumatiques d'assistance au freinage dont la Figure 1 illustre un exemple général.

Toutefois, la constitution générale et le fonctionnement des servomoteurs étant bien connus de l'homme de l'art, ils ne seront rapidement rappelés ici que pour permettre une compréhension totale du perfectionnement que représente l'invention.

Schématiquement, un servomoteur comprend une enveloppe rigide 1 séparée en deux chambres 2 et 3, de façon étanche en fonctionnement, par une membrane 4 solidaire d'un piston 5 mobile à l'intérieur de l'enveloppe.

La chambre avant 3, dont la face avant est, en fonctionnement, fermée de façon étanche par son montage sur un maître-cylindre (non représenté), est en permanence raccordée à une source de dépression (non représentée) à travers un raccord 6.

La pression dans la chambre arrière 2 est contrôlée par un clapet 7, commandé par une tige de commande 8, laquelle est reliée à la pédale de frein.

Lorsque la tige de commande 8 est en position de repos, en l'occurrence tirée vers la droite, le clapet 7 établit une communication entre les deux chambres 2 et 3 du servomoteur.

La chambre arrière 3 étant alors soumise à la même dépression que la chambre avant 2, le piston 5 est repoussé vers la droite, en position de repos, par un ressort 9.

L'actionnement de la tige de commande vers la gauche a pour effet, dans un premier temps, de déplacer le clapet 7 de façon qu'il isole l'une de l'autre les chambres 2 et 3 puis, dans un deuxième temps, de déplacer ce clapet de façon qu'il ouvre la chambre arrière 3 à la pression atmosphérique.

La différence de pression entre les deux chambres alors ressentie par la membrane 4 exerce sur le piston 5 une poussée qui tend à le déplacer vers la gauche en comprimant le ressort 9.

L'effort de freinage qu'exerce, par l'intermédiaire d'un plongeur 10, la tige de commande 8 à destination du maître-cylindre, et l'effort d'assistance au freinage résultant de la poussée du piston 5, sont appliqués sur la face amont (droite) d'un disque de réaction 11 dont la face aval (gauche) retransmet ces efforts à la tige de poussée 12, laquelle a pour fonction d'actionner le maître-cylindre lui-même.

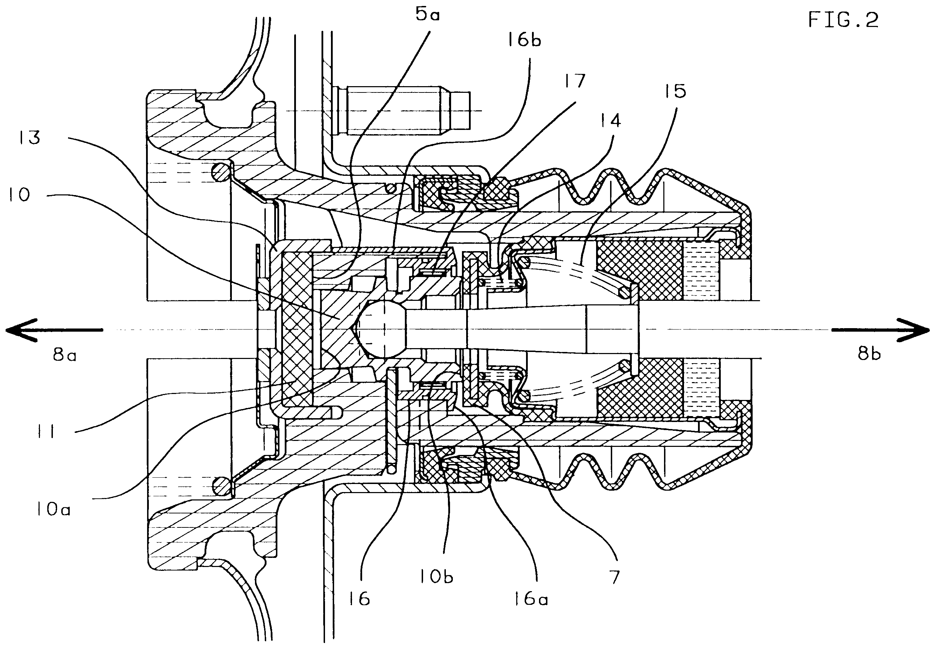

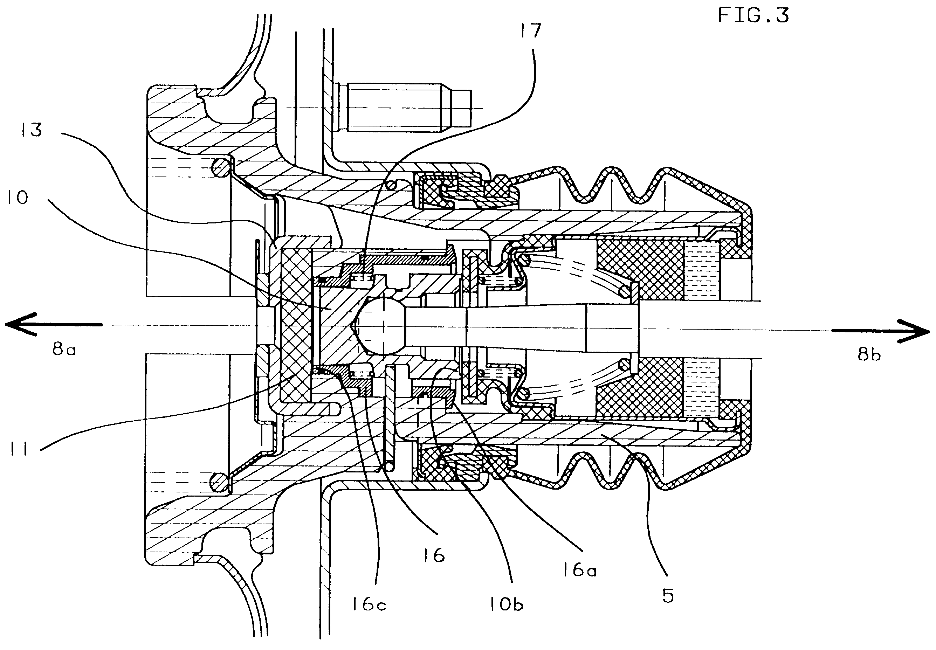

La compréhension approfondie de l'invention nécessite maintenant l'examen des figures 2 et 3.

Comme le montrent ces figures, le disque de réaction 11 est logé dans une coupelle 13 susceptible de retransmettre à la tige de poussée 12 les efforts combinés reçus par le disque de réaction 11, ces efforts étant appliqués par la face d'appui 10a du palpeur 10 et par une surface annulaire axiale 5a du piston 5, entourant le palpeur.

Le clapet 7 est élastiquement sollicité dans la direction axiale 8a, c'est-à-dire vers la gauche et suivant l'axe de la tige de commande 8, par un ressort 14, et est susceptible de coopérer avec deux sièges de clapet 10b, 16a. La tige de commande 8 est quand à elle sollicitée dans la direction 8b par un ressort de rappel 15.

Le premier siège de clapet 10b est formée par une partie annulaire du palpeur située à l'opposé de la face d'appui 10a, et le second clapet 16a, également de forme annulaire, est concentrique et extérieur au premier siège de clapet et occupe, dans la position de repos de la tige de commande 8 illustrée aux figures 2 et 3, une position plus avancée que celle du premier siège de clapet 10b dans le sens de la direction axiale 8a.

Comme le montrent les figures 2 et 3, le second siège 16a est formé par une face d'extrémité d'un manchon 16 monté dans le piston 5 de manière à pouvoir y coulisser de façon étanche en se déplaçant suivant une direction 8b, c'est-à-dire à l'opposé de la direction axiale 8a, par rapport au plongeur 10.

Un ressort 17, disposé entre le plongeur 10 et le manchon 16, écarte ces deux éléments l'un de l'autre et sollicite donc le manchon vers la première direction axiale 8a.

Selon un premier mode de réalisation (figure 2), le manchon 16 comporte une extension axiale 16b s'appuyant sur la coupelle 13 et interdisant un mouvement de ce manchon 16 dans la première direction axiale 8a, par rapport à cette coupelle.

Cet arrangement empêche que la distance axiale entre les premier et second sièges 10b, 16a, ne se trouve réduite lors de l'actionnement du clapet 7 et du mouvement consécutif du piston 5 vers la gauche.

Il en résulte une admission d'air plus rapide dans la chambre arrière 2, donc une diminution du temps de réponse du servomoteur.

Selon le second mode de réalisation de l'invention, illustré sur la figure 3, le manchon 16 est monté coulissant entre le palpeur et le piston 5 et présente une seconde face d'extrémité 16c en appui contre le disque de réaction.

Dès que l'actionnement du clapet 7 permet une augmentation de pression dans la chambre 2, la surface annulaire 5a du piston 5 exerce sur le disque de réaction 11 une pression orientée suivant la première direction axiale 8a.

Ce disque, qui se comporte comme un fluide incompressible, se déforme par un gonflement de sa partie centrale dans la seconde direction axiale 8b, repoussant donc le manchon 16 dans cette seconde direction.

Comme dans le premier mode de réalisation, cet arrangement permet ainsi d'accélérer l'admission d'air dans la chambre 2, donc de réduire le temps de réponse du servomoteur.

## Revendications

1. Dispositif de commande à clapet pour un servomoteur pneumatique d'assistance au freinage, comprenant :
- une tige de commande (8) susceptible, à partir d'une position de repos, de subir un déplacement suivant une première direction axiale (8a) sous l'effet d'un effort d'entrée, cette tige étant coiffée par un palpeur (10) lui-même terminé axialement par une face d'appui (10a) ;
- un clapet annulaire (7) entourant la tige de commande, ce clapet étant élastiquement sollicité vers la première direction axiale et susceptible d'être actionné par le déplacement de la tige de commande ;
- un premier siège de clapet (10b), formé par une partie annulaire du palpeur à l'opposé de la face d'appui de ce dernier ;
- un piston pneumatique (5) susceptible de se déplacer suivant la première direction axiale, depuis une position de repos, sous l'effet d'une différence de pression commandée par un actionnement du clapet, ce piston présentant une surface annulaire axiale (5a) qui entoure le palpeur ;
- un disque de réaction (11) logé dans une coupelle (13) et présentant une face libre sur laquelle la surface annulaire axiale du piston pneumatique et la face d'appui du palpeur sont susceptibles d'appliquer des efforts combinés à destination d'une tige de poussée (12) ; et
- un second siège de clapet (16a) de forme annulaire, concentrique et extérieur au premier siège, et occupant dans la position de repos de la tige de commande une position plus avancée que celle du premier siège de clapet dans le sens de la première direction axiale, le clapet se trouvant appliqué sur le premier siège dans la position de repos et sur le second siège lors de son actionnement,
caractérisé en ce que le second siège est formé par une face d'extrémité d'un manchon (16) monté de manière à pouvoir coulisser de façon étanche par rapport au piston (5) et conformé pour ne subir, par rapport à la coupelle (13), aucun mouvement dans le sens de la première direction axiale lors de l'actionnement du clapet.

2. Dispositif suivant la revendication 1, caractérisé en ce que le manchon (16) formant le second siège de clapet s'appuie sur la coupelle, au moins par une extension axiale (16b).

3. Dispositif suivant la revendication 1, caractérisé en ce que le manchon (16) formant le second siège de clapet est disposé entre le palpeur et le piston et présente une seconde face d'extrémité (16c) contre laquelle, lors de l'actionnement du clapet, la face libre du disque de réaction (11) vient s'appuyer avant de venir toucher le palpeur, ce manchon subissant alors, par rapport à la coupelle, un mouvement suivant une seconde direction axiale (8b), opposée à la première.

4. Dispositif suivant la revendication 1, caractérisé en ce qu'un ressort (17) sollicite le manchon vers la première direction axiale.

## Claims

1. Valve type control device for a pneumatic brake-booster, comprising:
- a control rod (8) which can be displaced, from a position of rest, in a first axial direction (8a) through the action of an input force, said rod being capped by a sensor (10) which in turn ends axially in a support face (10a);
- an annular valve (7) surrounding the control rod, said valve being urged elastically towards the first axial direction and being able to be actuated by the displacement of the control rod;
- a first valve seat (10b) formed by an annular portion of the sensor at the opposite end to the support face of the latter;
- a pneumatic piston (5) movable in the first axial direction, from a position of rest, through the action of a pressure difference caused by actuation of the valve, said piston having an annular axial surface (5a) surrounding the sensor;
- a reaction disk (11) housed in a cup (13) and having a free face against which the annular axial surface of the pneumatic piston and the support face of the sensor can apply combined forces for action on a push rod (12); and
- a second valve seat (16a) of annular shape, concentric to and outside the first seat and, in the position of rest of the control rod, occupying a position further ahead than that of the first valve seat in the sense of the first axial direction, the valve being applied against the first seat in the position of rest and against the second seat on being actuated,
characterized in that the second seat is formed by an end face of a sleeve (16) sealingly slidably mounted relative to the piston (5) and configured to undergo, relative to the cup (13), no movement in the sense of the first axial direction when the valve is actuated.

2. Device according to Claim 1, characterized in that the sleeve (16) forming the second valve seat bears against the cup, at least by means of an axial extension (16b)

3. Device according to Claim 1, characterized in that the sleeve (16) forming the second valve seat is disposed between the sensor and the piston and has a second end face (16c) against which, on actuation of the valve, the free face of the reaction disk (11) comes to bear before coming into contact with the sensor, said sleeve then undergoing, relative to the cup, a movement in a second axial direction (8b) opposite to the first.

4. Device according to claim 1, characterized in that a spring (17) urges the sleeve towards the first axial direction.

## Patentansprüche

1. Ventilsteuervorrichtung für einen pneumatischen Servomotor zur Bremshilfe mit:
- einer Steuerstange (8), welche aus einer Ruhestellung unter Einwirkung einer Eingangskraft eine Verschiebung in einer ersten axialen Richtung (8a) erfahren kann, wobei diese Stange von einem durch eine Anlagefläche (10a) axial begrenzten Fühler (10) bedeckt ist;
- einem die Steuerstange umgebenden Ringventil (7), wobei dieses Ventil in Richtung der ersten axialen Richtung elastisch beaufschlagt ist und durch die Verschiebung der Steuerstange betätigt werden kann;
- einem von einem ringförmigen Teil des Fühlers gegenüber dessen Anlagefläche gebildeten ersten Ventilsitz (10b);
- einem pneumatischen Kolben (5), der sich aus einer Ruhestellung unter der Wirkung eines durch eine Ventilbetätigung gesteuerten Druckunterschiedes in der ersten axialen Richtung bewegen kann, wobei dieser Kolben eine axiale Ringfläche (5a) aufweist, die den Fühler umgibt;
- einer in einer Schale (13) gelagerten Reaktionsscheibe (11), die eine freie Fläche aufweist, auf welche die axiale Ringfläche des pneumatischen Kolbens sowie die Anlagefläche des Fühlers zusammengesetzte, für eine Schubstange (12) bestimmte Kräfte ausüben können; und
- einem ringförmigen, außerhalb des ersten Sitzes konzentrisch zu diesem angeordneten zweiten Ventilsitz (16a), der in der Ruhestellung der Steuerstange eine im Verhältnis zur Position des ersten Ventilsitzes in der ersten axialen Richtung weiter nach vorne versetzte Position einnimmt, wobei das Ventil in der Ruhestellung an dem ersten Sitz und bei seiner Betätigung an dem zweiten Sitz anliegt,
dadurch gekennzeichnet, daß der zweite Sitz von einer Endfläche einer Muffe (16) gebildet wird, die derart angebracht ist, daß sie gegenüber dem Kolben (5) dicht verschiebbar ist, und derart ausgebildet ist, daß sie während der Betätigung des Ventils gegenüber der Schale (13) keine Bewegung in der ersten axialen Richtung erfahren muß.

2. Vorrichtung nach Anspruch 1, dadurch gekennzeichnet, daß die den zweiten Ventilsitz bildende Muffe (16) wenigstens mittels einer axialen Erweiterung (16b) an der Schale anliegt.

3. Vorrichtung nach Anspruch 1, dadurch gekennzeichnet, daß die den zweiten Ventilsitz bildende Muffe (16) zwischen dem Fühler und dem Kolben angeordnet ist und eine zweite Endfläche (16c) aufweist, an welcher die freie Fläche der Reaktionsscheibe (11) während der Betätigung des Ventils, bevor sie den Fühler berührt, zur Anlage kommt, wobei diese Muffe bezüglich der Schale eine Bewegung in einer der ersten axialen Richtung entgegengesetzten zweiten axialen Richtung (8b) erfährt.

4. Vorrichtung nach Anspruch 1, dadurch gekennzeichnet, daß eine Feder (17) die Muffe in der ersten axialen Richtung belastet.
